# EUROPÄISCHE PATENTANMELDUNG

(11) **EP 1 298 478 A1**
(43) Veröffentlichungstag der Anmeldung: **02.04.2003**
(21) Anmeldenummer: 02020007.7
(22) Anmeldetag: 05.09.2002
(51) Int. Cl.: G02B 7/02, G02B 7/04

(54) **Linsenfassung mit Klemmung durch piezoelektrische Elemente oder Formgedächtnismaterialien**

(30) Priorität: 27.09.2001 DE 10147753
(71) Anmelder: Carl Zeiss Microelectronic Systems GmbH, 07745 Jena (DE)
(72) Erfinder: Engel, Thomas, Dr., 99102 Erfurt Ortsteil Niedernissa (DE); Herbig, Volker, 99102 Erfurt Ortsteil Windischholzhausen (DE)
(74) Vertreter: Grimm, Christian Jan Rainer

(57) **Zusammenfassung**

Bei einer Optikeinrichtung mit einem Optikelement (7; 45) und einer Fassung (1; 44) zum Haltern von diesem weist die Fassung (1; 44) ein Halteelement (3; 39; 49) auf, das von einem ersten Formzustand in einen zweiten Formzustand überführbar ist, wobei das Optikelement (7; 45) im ersten Formzustand mit Spiel in der Fassung (1; 44) und im zweiten Formzustand ohne Spiel in der Fassung (1; 44) sitzt.

## Beschreibung

Die Erfindung bezieht sich auf eine Optikeinrichtung mit einem Optikelement und einer Fassung zum Haltern des Optikelements.

Die Fassung dient bei der Optikeinrichtung dazu, daß der optisch genutzte Teil des Optikelementes mechanisch an den richtigen Ort gebracht werden kann, wobei das Optikelement beispielsweise eine Linse aufweist, die mittels Klebstoff, optischen Kitt oder auch Lot in der Fassung fixiert ist. Das Verkleben der Linse in der Fassung ist aufwendig und weist die Schwierigkeit auf, daß dabei der optisch genutzte Teil der Linse mit Klebstoff, Kitt bzw. Lot verschmutzt werden kann. Des weiteren ist gerade bei der Verwendung von kurzwelliger Strahlung (Wellenlänge kleiner als 250 nm) bisher kein Klebstoff bekannt, der der Strahlenbelastung langfristig standhalten könnte.

Ausgehend hiervon ist es Aufgabe der Erfindung, eine Optikeinrichtung der eingangs genannten Art so weiterzubilden, daß das Haltern des Optikelements leicht möglich ist.

Erfindungsgemäß wird die Aufgabe bei einer Optikeinrichtung der eingangs genannten Art dadurch gelöst, daß die Fassung ein Halteelement aufweist, das von einem ersten Formzustand und in einem zweiten Formzustand überführbar ist, wobei das Optikelement im ersten Formzustand mit Spiel in der Fassung und im zweiten Formzustand ohne Spiel in der Fassung sitzt.

Dadurch wird es möglich, das Optikelement im ersten Formzustand in die Fassung einzusetzen, danach das Halteelement in den zweiten Formzustand überzuführen, wodurch dann das Optikelement fest gefaßt ist. In dieser Art und Weise ist ein leichtes und sicheres Fassen des Optikelements möglich, wobei die Fixierung des Optikelements mittels des Halteelements dauerhaft gewährleistet werden kann.

Des weiteren wird auch kein Klebstoff benötigt, um das Optikelement in der Fassung zu befestigen, so daß die erfindungsgemäße Optikeinrichtung bei kurzwelliger Strahlung problemlos eingesetzt werden kann, wenn ein geeignetes Material für das Halteelement verwendet wird. So ist z.B. piezoelektrisches Material bei kurzwelliger Strahlung einsetzbar.

Als erster und zweiter Formzustand wird jeweils ein bestimmter Zustand der Form des Halteelements bezeichnet, wobei das Halteelement zumindest von der einen Form in die andere Form überführt werden kann und bevorzugt noch von der anderen Form wieder zurück in die eine Form überführbar ist. Die Formänderung des Halteelements von der Form des ersten Formzustandes in die Form des zweiten Formzustandes führt dazu, daß das im ersten Formzustand lose sitzende Optikelement nun fest in der Fassung sitzt.

Dabei kann der zweite Formzustand entweder der kleinere oder der größere Formzustand sein. Im ersten Fall kann ein im Halteelement angeordnetes Optikelement (z. B. Linse) spielfrei gefaßt werden. So ist im ersten Fall bei z. B. einem kreisringförmigen Halteelement der Innendurchmesser im zweiten Formzustand kleiner als im ersten Formzustand, wobei das Halteelement im zweiten Formzustand noch bevorzugt ein Untermaß relativ zum Optikelement aufweist. Das Untermaß ist so gewählt, daß das Optikelement sicher (fest aber spannungsarm) gehalten ist. Im zweiten Fall kann das Halteelement in einem weiteren Fassungsteil (z.B. Gehäuse) sitzen, in dem es dann im zweiten Formzustand verspreizt ist. Bei z.B. einem kreisringförmigen Halteelement ist der Außendurchmesser des Halteelements im zweiten Formzustand größer als im ersten Formzustand, wobei das Halteelement im zweiten Formzustand bevorzugt ein Übermaß relativ zum Fassungsteil aufweist, so daß das Halteelement sicher verspreizt ist. Natürlich kann das Halteelement im ersten und zweiten Fall auch paßgenau ausgebildet sein, so daß kein Über- oder Untermaß vorliegt und die Halterung äußerst spannungsarm ist.

Die spielfreie Halterung im zweiten Formzustand kann durch mindestens zwei (z.B. drei) Halte- bzw. Kontaktpunkte zwischen dem Halteelement und dem Optikelement bzw. dem weiteren Fassungsteil verwirklicht sein. Maximal kann eine konturschlüssige Fassung vorliegen.

Die Fassung der Optikeinrichtung dient dazu, daß gehalterte Optikelement so positionieren zu können, daß der optisch genutzte Teil des Optikelements am gewünschten Ort (z.B. in einem Optiksystem) ist. Die Fassung ist somit der Teil der erfindungsgemäßen Optikeinrichtung, der zur mechanischen Kopplung mit anderen Bauelementen genutzt wird.

Eine besonders bevorzugte Weiterbildung der erfindungsgemäßen Weiterbildung besteht darin, daß das Halteelement zwischen dem ersten und zweiten Formzustand hin- und herschaltbar ist bzw. vom ersten in den zweiten und wieder zurück in den ersten Formzustand überführbar ist. Dadurch kann das gefaßte Optikelement wieder entfaßt werden, ohne daß dabei das Halteelement zerstört wird. Somit kann das Halteelement weiter verwendet werden.

Insbesondere kann das Halteelement als geschlossener Ring ausgebildet sein, so daß das Halteelement an den gesamten Umfang des Optikelementes (z. B. eine Linse) angreifen kann, wodurch die auf das Optikelement einwirkenden Haltekräfte gleichmäßig verteilt werden können. Dadurch wird vorteilhaft ein unerwünschtes Verspannen des Optikelementes verhindert.

In einer bevorzugten Ausgestaltung der erfindungsgemäßen Optikeinrichtung weist der Ring mehrere, in Umlaufrichtung des Rings benachbarte Ringsegmente auf, deren Ausdehnung in radialer Richtung voneinander unabhängig einstellbar ist. Aufgrund dieser Weiterbildung kann das Halteelement zusätzlich zu seiner Eigenschaft, das Optikelement sicher zu fassen, auch noch dazu benutzt werden, die Position des Optikelements in radialer Richtung und/oder die Verspannung des Optikelements auf gewünschte Werte einzustellen.

Ferner kann bei der erfindungsgemäßen Optikeinrichtung das Halteelement als Ring ausgebildet sein, der mehrere, in Umlaufrichtung des Rings benachbarte und voneinander getrennte Segmente aufweist. Dadurch wird vorteilhaft erreicht, daß beim zweiten Formzustand die Kräfte, die beispielsweise auf ein im Halteelement angeordnetes Optikelement einwirken, sehr klein gehalten werden können, da eine Größenänderung des Rings aufgrund der getrennten Segmente einfacher ist als bei einem geschlossenen Ring. Im Fall des geschlossenen Rings können auch quer zur Umlaufrichtung (z. B. radial) verlaufende Schlitze vorgesehen sein, die auch zur Reduzierung der Kräfte führen.

Insbesondere kann das Optikelement im zweiten Formzustand mittels Form- und/oder Kraftschluß gefaßt sein. Dadurch wird ein sicheres und dauerhaftes Haltern des Optikelementes gewährleistet.

Des weiteren ist es bevorzugt, daß bei der erfindungsgemäßen Optikeinrichtung die Fixierung des Optikelements im zweiten Formzustand des Halteelementes wieder gelöst werden kann, indem das Halteelement vom zweiten Formzustand in den ersten Formzustand zurücküberführt wird. Dadurch kann man beispielsweise das gehalterte Optikelement austauschen, falls dies gewünscht ist.

Besonders bevorzugt ist es bei der erfindungsgemäßen Optikeinrichtung, wenn das Halteelement aus einem metallischen Werkstoff mit Formgedächtniseigenschaften und/oder aus einem piezoelektrischen Material gebildet ist. Mit diesen Materialien ist das hin- und herschalten zwischen dem ersten und dem zweiten Formzustand besonders einfach zu verwirklichen. Als metallische Werkstoffe mit Formgedächtniseigenschaften können z. B. Legierungen auf Nickel-Titan-, Kupfer-Zink-Aluminuim- oder Kupfer-Aluminium-Nickel-Basis verwendet werden, wobei sowohl der thermische als auch der mechanische Formgedächtniseffekt (Memory-Effekt und Superelastizität) ausgenutzt werden können.

Bei einer bevorzugten Ausgestaltung der erfindungsgemäßen Optikeinrichtung umfaßt die Fassung einen Aktuator, der das Halteelement mit einem Halter verbindet, wobei mittels des Aktuators eine Verlagerung des Optikelements relativ zum Halter bewirkt werden kann. Dadurch wird vorteilhaft die Verstellbarkeit bzw. die Justierbarkeit des Optikelementes verbessert.

Als Aktuator kann beispielsweise ein oder mehrere piezoelektrische Elemente eingesetzt werden.

Eine weitere vorteilhafte Ausgestaltung der erfindungsgemäßen Optikeinrichtung besteht darin, daß das Optikelement im zweiten Formzustand ohne Spiel im Halteelement sitzt und im ersten Formzustand mit Spiel im Halteelement angeordnet ist. Somit wird eine Optikeinrichtung bereitgestellt, mit der das Optikelement in besonders einfacher Art gehaltert werden kann. Das Optikelement (z. B. eine Linse) muß lediglich im ersten Formzustand in das Halteelement eingesetzt werden, das dann danach in den zweiten Formzustand überführt wird, wodurch das Optikelement dann fest aber spannungsarm gefaßt ist. Bevorzugt umfaßt bei dieser Ausgestaltung das Optikelement nur das optisch wirksame Element selbst, das z.B. eine oder mehrere Linsen, Prismen und/oder Gitter sein kann.

Ferner kann man als Material für das Halteelement beispielsweise Kunststoff verwenden. Das Halteelement ist dann so gefertigt, daß es im ersten Formzustand vorliegt. Nach Einlegen des Optikelements wird der Kunststoff (der z.B. ABS sein kann) derart erwärmt, daß das Halteelement in den zweiten Formzustand überführt wird, der nach Abkühlen des Kunststoffs beibehalten wird. Das Optikelement ist somit irreversibel fixiert, wobei sehr wenig Arbeitsschritte zum Fassen benötigt werden (z.B. entfällt das mechanische Kleben). Das Kunststoffhalteelement kann dann mechanisch mit weiteren Bauteilen verbunden werden, um das Optikelement an die gewünschte Position in einem Optiksystem zu bringen.

In einer bevorzugten Ausgestaltung der erfindungsgemäßen Optikeinrichtung steht das Halteelement im zweiten Formzustand in direktem Kontakt mit dem Optikelement. Es kann somit direkt am optisch wirksamen Element angreifen. Dadurch wird ein dauerhaftes Fassen des Optikelementes bei sehr geringem Aufwand gewährleistet, da keine weiteren Bauelemente zwischen dem Optikelement und dem Halteelement vorgesehen werden müssen.

Ferner kann bei der erfindungsgemäßen Optikeinrichtung das Halteelement eine dem Optikelement zugewandte Innenseite mit einer Aufnahmenut für das Optikelement aufweisen. Damit wird vorteilhaft erreicht, daß das Halteelement an einer größeren Fläche des Optikelements angreift, wodurch die auf das Optikelement einwirkenden Haltekräfte auf eine größere Fläche verteilt werden können. Dadurch werden unerwünschte Verspannungen des Optikelements so gut wie vollständig vermieden.

Des weiteren kann bei der erfindungsgemäßen Optikeinrichtung der zweiten Formzustand ein Formendzustand sein, in dem das Halteelement relativ zum Optikelement ein definiertes Untermaß aufweist oder auch paßgenau ist (Untermaß ist gleich null). Der Formendzustand ist dabei der Formzustand, in den das Halteelement reversibel vom ersten Formzustand überführbar ist. Sofern das Optikelement eine kreiszylinderförmige Außenkontur aufweist, wird der Innendurchmesser des Halteelementes, um das Untermaß zu erzeugen, so gewählt, daß er kleiner ist als der Durchmesser des Optikelementes. Der Betrag, um den er kleiner ist (das Untermaß), ist dabei so bestimmt, daß das Optikelement fest eingeschlossen werden kann, ohne es dabei zu verspannen.

Von besonderem Vorteil ist es, wenn die Überführung zwischen den beiden Formzuständen reversibel ist, da dann beispielsweise ein Auswechseln des Optikelements oder ein Neuausrichten des Optikelements leicht durchführbar ist.

In einer bevorzugten Ausgestaltung der erfindungsgemäßen Optikeinrichtung entspricht die Innenkontur des Halteelementes im zweiten Formzustand der Außenkontur des zu fassenden Optikelementes. Wenn eine Linse mit kreiszylinderförmiger Außenkontur gehaltert werden soll, weist dann das Halteelement eine kreiszylinderförmige Innenkontur auf. Dadurch wird der Vorteil erzielt, daß das Halteelement entlang der gesamten Außenkontur des Optikelementes gleichmäßig angreifen kann, so daß unerwünschte Verspannungen der gefaßten Linse vermieden werden können.

Ferner kann bei der erfindungsgemäßen Optikeinrichtung das Halteelement einstückig ausgebildet sein. Auch ist es möglich, daß die Fassung ausschließlich aus dem Halteelement besteht. Dadurch kann eine sehr kompakte, einfach aufgebaute aber dennoch ausgezeichnete Fassungseigenschaften aufweisende Optikeinrichtung verwirklicht werden.

Bei einer vorteilhaften Weiterbildung der erfindungsgemäßen Optikeinrichtung ist das Halteelement (fest) mit dem Optikelement verbunden und sitzt im zweiten Formzustand ohne Spiel in einem Fassungsteil der Fassung und ist im ersten Formzustand mit Spiel im Fassungsteil angeordnet. Das Fassungsteil kann beispielsweise eine Objektivhülse sein, in der mehrere Optikeinrichtungen angeordnet werden. Mit dieser Ausgestaltung der erfindungsgemäßen Optikeinrichtung kann das Optikelement (das beispielsweise eine in herkömmlicher Art mit einem Linsenträger verbundene Linse ist) sicher im Fassungsteil fixiert werden. Das Optikelement kann natürlich auch ein gemäß einer der obigen Ausführungsformen gefaßtes optisches Element (z.B. Linse) sein, so daß ein erstes Halteelement zur Fassung des optischen Elements und ein zweites Halteelement zum Fixieren des so gefaßten optischen Elements im Fassungsteil vorgesehen sind.

Besonders bevorzugt ist es, wenn bei dieser Ausführungsform der zweiten Formzustand ein Formendzustand ist, in dem das (zweite) Halteelement relativ zum Fassungsteil ein Übermaß aufweist oder paßgenau ist (Übermaß ist gleich null). Dadurch wird eine feste und dauerhafte Fixierung im Fassungsteil gewährleistet.

Insbesondere kann dabei die Außenkontur des (zweiten) Halteelements im zweiten Formzustand der Innenkontur des Fassungsteils entsprechen, so daß eine gleichmäßige Kraftverteilung entlang der Außenkontur des Halteelements gewährleistet wird, wodurch die Halterung dauerhaft und sicher realisierbar ist.

Die Erfindung wird nachfolgend beispielshalber anhand der Zeichnungen noch näher beschrieben. Von den Figuren zeigen:
- Fig. 1a-1c: Schnittansichten der erfindungsgemäßen Optikeinrichtung zum Erläutern des Halterungsprinzips;
- Fig. 2: einen vergrößerten Ausschnitt einer Weiterbildung des Halteelementes der erfindungsgemäßen Optikeinrichtung;
- Fig. 3: eine Draufsicht einer weiteren Ausführungsform eines Halteelementes der erfindungsgemäßen Optikeinrichtung;
- Fig. 4: eine Schnittansicht einer weiteren Ausführungsform der erfindungsgemäßen Optikeinrichtung;
- Fig. 5a-5c: Schnittansichten einer anderen Ausführungsform der erfindungsgemäßen Optikeinrichtung zum Erläutern der Art der Halterungen des optischen Elementes;
- Fig. 6a-6c: Schnittansichten einer noch anderen Ausführungsform der erfindungsgemäßen Optikeinrichtung, und
- Fig. 7a-7c: Schnittansichten einer weiteren Ausführungsform der erfindungsgemäßen Optikeinrichtung.

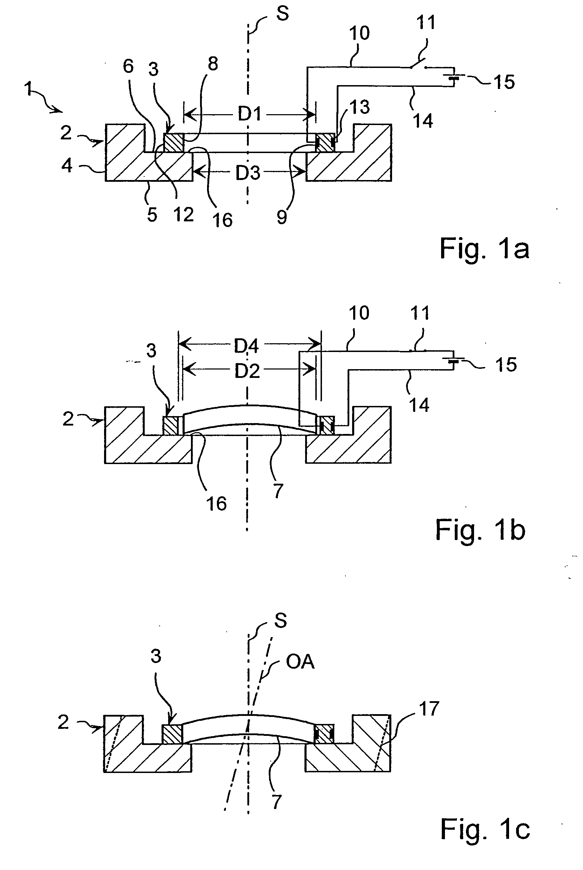

Wie aus Fig. 1a bis 1c ersichtlich ist, umfaßt die erfindungsgemäße Optikeinrichtung eine Fassung 1 mit einem ringförmigen Metallhalter 2 und ein mit diesem verbundenes Halteelement 3, das aus einem piezoelektrischen Material gebildet ist.

Der Metallhalter 2 weist einen L-förmigen Querschnitt mit einem ersten und einem zweiten Schenkel 4, 5 auf.

Das ringförmige Halteelement 3, das einen rechteckigen oder einen quadratischen Querschnitt umfaßt, ist mit der Oberseite 6 des zweiten Schenkels 5 fest verbunden (beispielsweise mittels Löten) und weist einen Innendurchmesser D1 auf. Der Innendurchmesser D1 ist so gewählt, daß er gegenüber dem Durchmesser D2 einer zu haltemden Linse 7 ein vorbestimmtes Untermaß enthält.

Ferner ist an der Innenseite 8 des Halteelementes 3 ein erster Kontakt 9 vorgesehen, der über eine Leitung 10 mit einem Schalter 11 verbunden ist. An der der Innenseite 8 abgewandten Außenseite 12 des Halteelementes 3 ist ein zweiter Kontakt 13 vorgesehen, der über eine Leitung 14 mit einem Ende einer (bevorzugt steuerbaren) Spannungsquelle 15 verbunden ist, wobei das andere Ende der Spannungsquelle 15 an den Schalter 11 angeschlossen ist.

Der nach innen gerichtete zweite Schenkel 5 des Metallhalters 2 ist so groß ausgebildet, daß der Durchmesser D3 der dadurch begrenzten zylinderförmigen Ausnehmung sowohl kleiner als der Durchmesser D1 des Haltelementes 3 als auch kleiner als der Linsendurchmesser D2 ist. Dadurch bildet der (bezogen auf das Halteelement 3) radial nach innen überstehende Teil der Oberseite 6 des zweiten Schenkels 5 eine (ringförmige) Auflagefläche 16.

Zum Fassen der Linse 7 wird, wie in Fig. 1b angedeutet ist, der Schalter 11 geschlossen, so daß eine Spannung an das piezoelektrische Halteelement 3 angelegt wird. Dadurch wird bewirkt, daß die Breite des rechteckigen bzw. quadratischen Querschnitts des Halteelementes 3 abnimmt, wodurch der Innendurchmesser des Halteelements 3 vergrößert wird. Somit wird das Halteelement 3 vor einem zweiten Formzustand, der in Fig. 1a gezeigt ist, in einen ersten Formzustand, der in Fig. 1b gezeigt ist, überführt. Der im ersten Formzustand vorhandene Innendurchmesser D4 des Halteelements wird so gewählt, daß im ersten Formzustand die Linse 7 mit Spiel in radialer Richtung im Halteelement 3 angeordnet werden kann, indem sie auf die Auflagefläche 16 gelegt wird.

Danach wird die an das Halteelement 3 angelegte Spannung durch Öffnen des Schalters 11 abgeschaltet, wodurch das piezoelektrische Halteelement 3 in den zweiten Formzustand, wie in Fig. 1c gezeigt ist, zurückkehrt. Da der zweiten Formzustand so gewählt ist, daß der Innendurchmesser D1 ein vorbestimmtes Untermaß im Vergleich zum Linsendurchmesser D2 aufweist, wird die Linse 7 eingeklemmt und somit fest gefaßt. Das Untermaß des Halteelementes 3 ist dabei so gewählt, daß die Linse 7 fest eingeschlossen wird, ohne sie dabei zu verspannen. Mit der erfindungsgemäßen Optikeinrichtung kann somit mittels des Halteelementes 3 die Linse 7 ohne die Verwendung von Klebstoffen gehaltert werden. Dies ist von besonderem Vorteil, wenn die Linse 7 in Optiksystemen für kurzwellige Strahlung (beispielsweise mit einer Wellenlänge von kleiner als 250 nm) eingesetzt werden soll. Im Zustand von Fig. 1c können die elektrischen Leitungen 10, 14 und der Schalter 11 sowie die Spannungsquelle entfernt sein.

Die so gefaßte Linse 7 kann dann beispielsweise in einen Hohlzylinder (nicht gezeigt) zusammen mit weiteren Optikelementen eingesetzt werden. Falls die optische Achse OA der Linse 7 nicht mit der Symmetrieachse S der Fassung 1 übereinstimmt, wie in Fig. 1c zur Verdeutlichung stark übertrieben dargestellt ist, wird die Außenseite des Metallhalters 2 so lange nachgedreht bis die neue Symmetrieachse der nachgearbeiteten Außenseite des Halteelements 2 mit der optischen Achse OA zusammenfällt. Die Außenseite des Metallhalters ist dann, wie durch die Strichlinie 17 angedeutet ist, ausgerichtet.

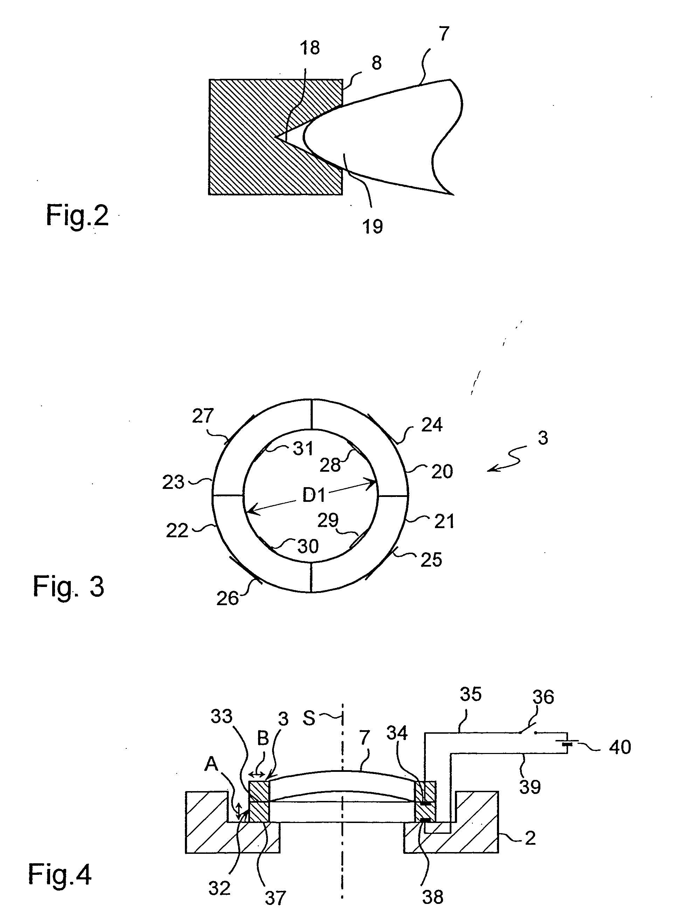

In Fig. 2 ist ein vergrößerter Ausschnitt des Halteelementes 3 mit gefaßter Linse 7 gemäß einer Weiterbildung der in Fig. 1 gezeigten Ausführungsform dargestellt. Bei dieser Ausführungsform ist an der Innenseite 8 eine Ringnut 18 mit dreieckigem Querschnitt ausgebildet. Die Ringnut 18 ist nach innen hin offen und dient zur Aufnahme eines Randabschnitts 19 der Linse 7. In Fig. 2 ist dabei der zweiten Formendzustand des Halteelementes 3 gezeigt, in dem die Linse 7 ohne Spiel im Halteelement 3 sitzt. Zum Einsetzen der Linse 7 wird der Innendurchmesser des ringförmigen Halteelementes 3 in der oben beschriebenen Weise so weit vergrößert, daß die Linse 7 ohne Schwierigkeiten von oben in das Halteelement 3 eingesetzt werden kann. Danach wird das Halteelement wieder in den zweiten Formzustand (Formendzustand) überführt, so daß die Linse 7 gefaßt ist.

Eine weitere Ausführungsform des Halteelements 3 der Fassung 1 der erfindungsgemäßen Optikeinrichtung ist in Fig. 3 in Draufsicht dargestellt, wobei der zweiten Formendzustand gezeigt ist. Das piezoelektrische Halteelement 3 umfaßt vier, in Umfangsrichtung des Rings benachbarte Ringsegmente 20, 21, 22, 23, die jeweils voneinander unabhängig ansteuerbar sind. Dazu weist jedes Ringsegment jeweils einen Außenkontakt 24, 25, 26, 27 und einen Innenkontakt 28, 29, 39, 31 auf, über die es mit der gewünschten Spannung beaufschlagt werden kann. Zur Vereinfachung der Darstellung sind die mit den Kontakten 24 bis 31 verbundenen Leitungen und weitere Komponenten (wie z.B. steuerbare Spannungsquellen) nicht dargestellt.

Durch die individuelle Ansteuerbarkeit bzw. Veränderbarkeit des Formzustandes der einzelnen Ringsegmente 20 bis 23 wird es möglich, daß die mit diesem Halteelement 3 gefaßte Linse 7 in radialer Richtung versetzt und/oder deformiert werden kann. So können beispielsweise die gegenüberliegenden Ringsegmente 21 und 23 im ersten Formzustand derart angesteuert werden, daß die Ausdehnung in radialer Richtung des Ringsegmentes 21 kleiner wird, während die Ausdehnung in radialer Richtung des Ringsegmentes 23 größer wird. Somit weist das Halteelement 3 neben seiner Funktion der Halterung der Linse 7 auch noch die Funktion der Feinjustierung und/oder der Einstellung einer gewünschten Deformierung der Linse 7 auf.

In Fig. 4 ist eine weitere Ausführungsform der erfindungsgemäßen Optikeinrichtung gezeigt, bei der die Linse 7 mittels des beschriebenen piezoelektrischen Halteelements 3 gefaßt ist. Das piezoelektrische Halteelement 3 seinerseits ist über ein weiteres ringförmiges, piezoelektrisches Element 32 mit dem Metallhalter 2 verbunden. An der Oberseite 33 des piezoelektrischen Elementes 32 ist ein erster Kontakt 34 vorgesehen, der über eine Verbindung 35 mit einem Schalter 36 verbunden ist. Die Unterseite 37 des piezoelektrischen Elementes 32 weist einen zweiten Kontakt 38 auf, der über eine Verbindung 39 an einen Anschluß einer (bevorzugt steuerbaren) Spannungsquelle 40 angeschlossen ist, wobei der zweite Anschluß der Spannungsquelle 40 mit dem Schalter 36 verbunden ist. Dadurch kann die Ausdehnung (bzw. die Höhe) des piezoelektrischen Elementes 32 in Richtung der Symmetrieachse S verändert werden, wie durch den Doppelpfeil A angedeutet ist. Somit ist das Halteelement 3 über einen Aktuator, der hier durch das piezoelektrische Element 32 verwirklicht ist, mit dem Metallhalter 2 verbunden und kann in vorteilhafter Weise noch nachjustiert werden.

Wenn das Halteelement 3 gemäß dem in Fig. 3 gezeigten Halteelement 3 ausgebildet ist, kann die Linse 7 auch noch in radialer Richtung versetzt werden, wie durch den Doppelpfeil B angedeutet ist. Dadurch wird ein weiterer Freiheitsgrad zur Justierung der Linse 7 hinzugewonnen. In Fig. 4 sind zur Vereinfachung der Darstellung die Kontakte 24 bis 31 und die entsprechenden Verbindungen und restlichen elektrischen Komponenten zur Ansteuerung des Halteelementes 3 weggelassen.

Insbesondere kann das piezoelektrische Element 32 auch in entsprechender Weise wie das in Fig. 3 gezeigte Halteelement 3 mehrere Ringsegmente aufweisen, wobei beim Element 32 aber die Höhe der Ringsegmente (also die Ausdehnung in Richtung der Symmetrieachse) voneinander unabhängig einstellbar ist. Damit kann die Linse 7 auch noch relativ zur Symmetrieachse S verkippt werden.

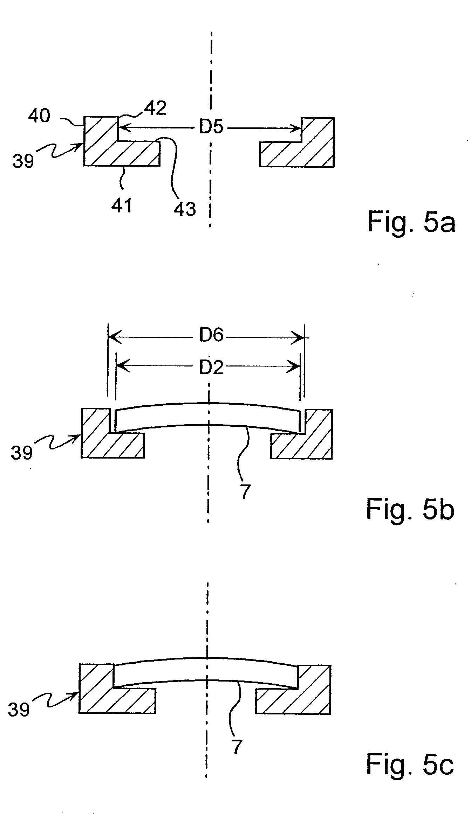

In Fig. 5a-5c ist eine weitere Ausführungsform der erfindungsgemäßen Optikeinrichtung gezeigt, wobei das Halteelement 39 einen L-förmigen Querschnitt mit einem ersten und einem zweiten Schenkel 40 und 41 aufweist und aus einem metallischen Werkstoff mit Formgedächtnis-Eigenschaften gebildet ist. Als metallischer Werkstoff können Legierungen auf Nickel-Titan-Basis oder auch auf Kupfer-Zink-Aluminium- sowie Kupfer-Aluminium-Nickel-Basis verwendet werden.

Die Innenseite 42 des sich nach oben erstreckenden ersten Schenkels 39 dient als kreisringförmige Haltefläche mit einem Innendurchmesser D5 und die Oberseite 43 des sich radial nach innen erstreckenden Schenkels 41 dient als Auflagefläche. Bei dem in Fig. 5 gezeigten Halteelement 39 wird der mechanische Formgedächtniseffekt (sogenannte Superelastizität) ausgenutzt, bei dem ausgehend von einem zweiten Formendzustand (der in Fig. 5a gezeigt ist) eine reversible elastische Dehnung (beispielsweise bis zu 10%) bis zu in einem ersten Formzustand möglich ist. Diese Dehnung kann mit einem geeigneten Werkzeug (nicht gezeigt) durchgeführt werden und führt zu dem in Fig. 5b gezeigten Formzustand, in dem der Innendurchmesser D6 der Haltefläche entsprechend vergrößert ist und die Linse 7 mit Spiel auf die Auflagefläche 43 gelegt werden kann. Danach wird die Dehnung des Halteelements 39 nicht mehr aufrecht erhalten, so daß es in den zweiten Formendzustand zurückgeht (es zieht sich zusammen) und dabei, wie in Fig. 5c gezeigt ist, die Linse 7 unter Klemmwirkung faßt.

Da das Halteelement 39 aus einem metallischen Werkstoff besteht, kann, falls nötig, die in Verbindung mit Fig. 1c beschriebene Nachbearbeitung (Nachdrehen) durchgeführt werden. Des weiteren kann die Fassung 1 durch ein einziges Element, das Halteelement 39, verwirklicht werden.

Natürlich kann statt des mechanischen Formgedächtniseffekts auch der thermische Formgedächtniseffekt zum Wechseln zwischen dem ersten und zweiten Formzustand verwendet werden. In diesem Fall wird beispielsweise bei dem in Fig. 5a gezeigten ersten Formzustand, in dem die durch die Innenseite 42 des ersten Schenkels 40 gebildete Haltefläche ein relativ zum Linsendurchmesser D2 vorbestimmtes Untermaß aufweist (D5 ist kleiner als D2), durch rasches Abkühlen des Halteelementes 39 dieser Formzustand fest eingestellt bzw. dem Halteelement eingeprägt. Danach wird eine Verformung derart durchgeführt, daß der Innendurchmesser D6 des Halteelementes 39 vergrößert ist, wodurch der in Fig. 5b gezeigte Zustand erreicht wird. Die Rückführung des Halteelementes 39 nach Einsetzen der Linse 7 in den zweiten Formendzustand kann dann durch Erwärmen des Halteelementes 39 durchgeführt werden (Fig. 5c).

In einer weiteren Ausführungsform (nicht gezeigt) kann in der Innenseite 42 des ersten Schenkels 40 eine nach innen offene Ringnut vorgesehen sein, in der in gleicher Weise wie in Fig. 2 der Randschnitt 19 der Linse 7 liegt, wenn das Halteelement 39 im zweiten Formendzustand ist.

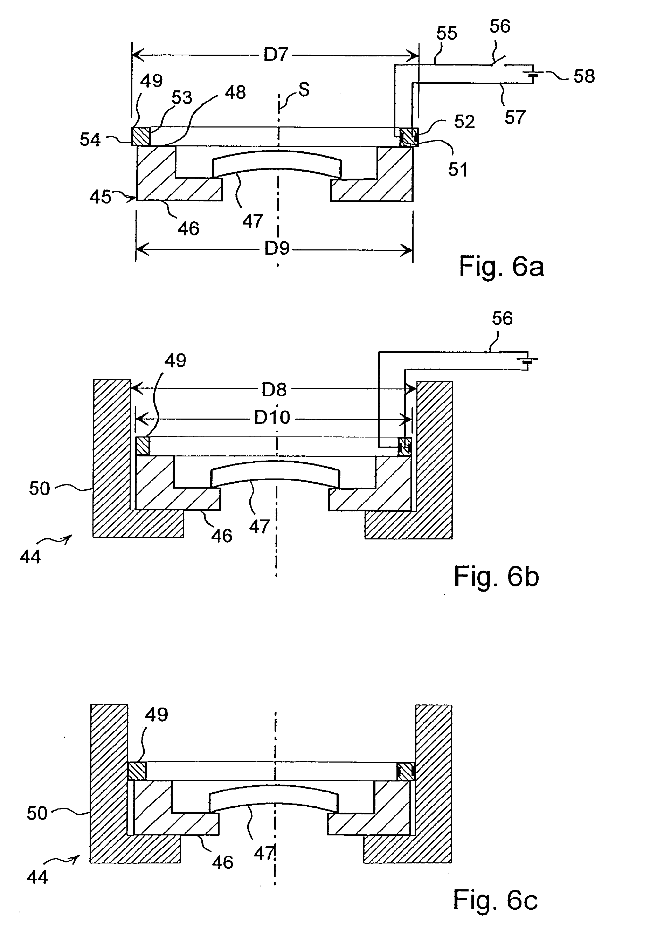

In Fig. 6a-6c sind Schnittansichten zur Erläuterung einer weiteren Ausführungsform der erfindungsgemäßen Optikeinrichtung dargestellt. Die Fassung 44 umfaßt ein Optikelement 45 mit einem Metallhalter 46 und einer darauf befestigten (z. B. durch Kleben) Linse 47, ein an der Oberseite 48 des Metallhalters 46 befestigtes (z.B. durch Kleben oder Löten) ringförmiges Halteelement 49 sowie eine Hülse 50.

Wie insbesondere aus Fig. 6a ersichtlich ist, weist das Halteelement 49, das aus einem piezoelektrischen Material gebildet ist, einen ersten und einen zweiten Kontakt 51, 52 an der Ringinnenseite 53 bzw. Ringaußenseite 54 auf. Der erste Kontakt 51 ist über eine Leitung 55 mit einem Schalter 56 verbunden, und der zweite Kontakt 52 ist über eine Leitung 57 mit einem Anschluß einer (bevorzugt regelbaren) Spannungsquelle 58 verbunden, wobei der andere Anschluß der Spannungsquelle 58 mit dem Schalter 56 verbunden ist. Bei der in Fig. 6a gezeigten Darstellung befindet sich das Halteelement 49 im zweiten Formzustand, da der Schalter 56 offen ist. In diesem Formzustand weist das Halteelement 54 einen Außendurchmesser D7 auf, der gegenüber dem Innendurchmesser D8 der Hülse 50 ein vorbestimmtes Übermaß aufweist. Der Außendurchmesser D7 des Halteelements 49 im zweiten Formzustand ist auch größer als der Außendurchmesser D9 des Metallhalters 46, wobei das Halteelement 49 so auf der Oberseite 48 des Metallhalters 46 angeordnet ist, daß es in radialer Richtung übersteht.

Wenn nun der Schalter 56 geschlossen wird, wird eine vorbestimmte Spannung an das Halteelement 49 angelegt, so daß sich dessen Außendurchmesser derart verkleinert, daß der Außendurchmesser D10 in diesem ersten Formzustand kleiner ist als der Innendurchmesser D8 der Hülse 50. Da auch der Außendurchmesser D9 des Metallhalters 46 kleiner als der Innendurchmesser D8 der Hülse 50 ist, kann im ersten Formzustand das Optikelement 45 von oben in die Hülse 50 mit radialem Spiel eingesetzt werden, wie in Fig. 6b dargestellt ist.

Nach dem Einsetzen wird dann der Schalter 56 geöffnet, so daß das Halteelement 49 in seinen zweiten Formzustand zurück überführt wird, wodurch es sich in der Hülse 50 verspreizt. Die Spreizwirkung ist dabei durch das vorbestimmte Übermaß gegeben. In diesem Zustand (Fig. 6c) können dann die Leitungen 55, 57 sowie der Schalter 56 und die Spannungsquelle 58 vom Halteelement 49 getrennt werden.

Natürlich ist es auch möglich, die Linse 47 nicht in herkömmlicher Art und Weise sondern gemäß einer der oben beschriebenen Ausführungsformen zu haltern. Ferner kann in gleicher Weise wie bei den obigen Ausführungsformen der Metallhalter 46 entsprechend nachgedreht werden, wenn die Linse 47 nicht optimal ausgerichtet ist (wobei in diesem Fall das Halteelement erst nach dem Nachdrehen am Metallhalter befestigt wird), und das Halteelement kann auch aus einem Werkstoff mit Formgedächtnis-Eigenschaften gebildet sein.

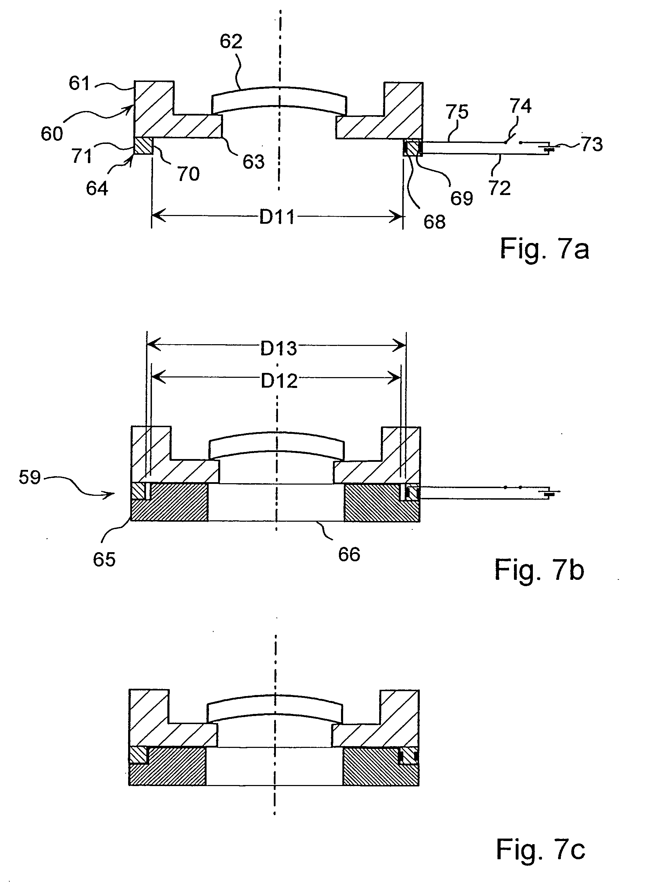

Eine weitere Ausführungsform der erfindungsgemäßen Optikeinrichtung ist in den Schnittansichten in Fig. 7a-7c dargestellt. Die Fassung 59 umfaßt ein Optikelement 60 mit einem Metallhalter 61 und einer darauf befestigten (z.B. durch Kleben) Linse 62, ein an der Unterseite 63 des Metallhalters 61 befestigtes (z.B. durch Kleben oder Löten) ringförmiges Halteelement 64, das aus einem piezoelektrischen Material gebildet ist, sowie ein Fassungsteil 65, das eine zentrale Druchgangsbohrung 66 aufweist.

Das Halteelement 64 weist, wie insbesondere aus Fig. 7a ersichtlich ist, einen ersten und einen zweiten Kontakt 68, 69 an der Ringinnenseite 70 bzw. an der Ringaußenseite 71 auf. Der erste Kontakt 68 ist über eine Leitung 72 mit einem Anschluß einer (bevorzugt regelbaren) Spannungsquelle 73 verbunden, und der andere Anschluß der Spannungsquelle 73 ist über einen Schalter 74 und eine Leitung 75 mit dem zweiten Kontakt 69 verbunden. Bei der Darstellung von Fig. 7a ist das Halteelement 64 im zweiten Formzustand, da der Schalter 74 geöffnet ist. Im zweiten Formzustand weist das Halteelement 64 einen Innendurchmesser D11 auf, der gegenüber dem Flanschaußendurchmesser D12 des Fassungsteils 65 ein vorbestimmtes Untermaß aufweist.

Wenn der Schalter 74 geschlossen ist, wie in Fig. 7b dargestellt ist, wird eine vorbestimmte Spannung des Halteelements 64 angelegt, wodurch der Innendurchmesser des Halteelementes 64 vergrößert wird und einen Wert D13 aufweist, der größer ist als der Flanschaußendurchmesser D12. Dadurch ist es möglich, im ersten Formzustand (mit geschlossenem Schalter 73) den Metallhalter 61 mit dem Halteelement 64 auf das Fassungsteil 65 aufzusetzten. Danach wird der Schalter 74 wieder geöffnet, wodurch das Halteelement 64 in den zweiten Formzustand zurückkehrt und ohne radialem Spiel den Flansch des Fassungsteils 65 einklemmt bzw. faßt. In diesem Zustand können dann die Leitungen 72, 75, der Schalter 74 sowie die Spannungsquelle 73 vom Halteelement 64 getrennt sein, wie in Fig. 7c dargestellt ist.

## Patentansprüche

1. Optikeinrichtung mit einem Optikelement (7; 45) und einer Fassung (1; 44) zum Haltern von diesem, **dadurch gekennzeichnet, daß** die Fassung (1; 44) ein Halteelement (3; 39; 49) aufweist, das von einem ersten Formzustand in einen zweiten Formzustand überführbar ist, wobei das Optikelement (7; 45) im ersten Formzustand mit Spiel in der Fassung (1; 44) vorgesehen ist und im zweiten Formzustand ohne Spiel in der Fassung (1; 44) sitzt.

2. Optikeinrichtung nach Anspruch 1, **dadurch gekennzeichnet, daß** das Halteelement zwischen dem ersten und dem zweiten Formzustand hin- und herschaltbar ist.

3. Optikeinrichtung nach Anspruch 2, **dadurch gekennzeichnet, daß** das Halteelement (3; 39; 49) als geschlossener Ring ausgebildet ist.

4. Optikeinrichtung nach Anspruch 3, **dadurch gekennzeichnet, daß** der Ring mehrere, in Umlaufrichtung des Rings benachbarte Ringsegmente (20, 21, 22, 23) umfaßt, deren radiale Ausdehnung voneinander unabhängig einstellbar ist.

5. Optikeinrichtung nach Anspruch 1 oder 2, **dadurch gekennzeichnet, daß** das Halteelement (3; 39; 49) als Ring ausgebildet ist, der mehrere, in Umlaufrichtung des Rings benachbarte und voneinander getrennte Segmente aufweist.

6. Optikeinrichtung nach einem der Ansprüche 1 bis 5, **dadurch gekennzeichnet, daß** das Optikelement (7; 45) im zweiten Formzustand mittels Form- und/oder Kraftschluß gehaltert ist.

7. Optikeinrichtung nach Anspruch 6, **dadurch gekennzeichnet, daß** der Form- und/oder Kraftschluß durch Überführen des Halteelementes (3; 39; 49) in den ersten Formzustand lösbar ist.

8. Optikeinrichtung nach einem der Ansprüche 1 bis 7, **dadurch gekennzeichnet, daß** das Halteelement (3; 39; 49) aus einem metallischen Werkstoff mit Formgedächtniseigenschaften und/oder aus einem piezoelektrischen Material gebildet ist.

9. Optikeinrichtung nach einem der Ansprüche 1 bis 8, **dadurch gekennzeichnet, daß** die Fassung (1; 44) einen Aktuator (32) umfaßt, der das Halteelement (3) mit einem Halter (2) verbindet, wobei mittels des Aktuators (32) eine Verlagerung des Optikelements (7) relativ zum Halter (2) bewirkt werden kann.

10. Optikeinrichtung nach einem der Ansprüche 1 bis 9, **dadurch gekennzeichnet, daß** das Optikelement (7) im zweiten Formzustand ohne Spiel im Halteelement (3; 39) sitzt und im ersten Formzustand mit Spiel im Halteelement (3; 39) angeordnet ist.

11. Optikeinrichtung nach Anspruch 10, **dadurch gekennzeichnet, daß** das Halteelement (3; 39; 49) im zweiten Formzustand in direktem Kontakt mit dem Optikelement (7) steht.

12. Optikeinrichtung nach Anspruch 10 oder 11, **dadurch gekennzeichnet, daß** das Halteelement (3; 39) eine dem Optikelement (7) im zweiten Formzustand zugewandte Innenseite (8; 42) mit einer Aufnahmenut (18) für das Optikelement (7) umfaßt.

13. Optikeinrichtung nach einem der Ansprüche 10 bis 12, **dadurch gekennzeichnet, daß** der zweite Formzustand ein Formendzustand ist, in dem das Halteelement (3) relativ zum Optikelement (7) ein Untermaß aufweist.

14. Optikeinrichtung nach einem der Ansprüche 10 bis 13, **dadurch gekennzeichnet, daß** die Innenkontur des Halteelements (3; 39) im zweiten Formzustand der Außenkontur des Optikelements (7) entspricht.

15. Optikeinrichtung nach einem der Ansprüche 1 bis 9, **dadurch gekennzeichnet, daß** das Halteelement (49) mit dem Optikelement (45) verbunden ist und in einem Fassungsteil (50) der Fassung (44) im zweiten Formzustand ohne Spiel sitzt und im ersten Formzustand mit Spiel im Fassungsteil (50) angeordnet ist.

16. Optikeinrichtung nach Anspruch 15, **dadurch gekennzeichnet, daß** der zweite Formzustand ein Formendzustand ist, in dem das Halteelement (49) relativ zum Fassungsteil (50) ein Übermaß aufweist.

17. Optikeinrichtung nach Anspruch 15 oder 16, **dadurch gekennzeichnet, daß** die Außenkontur des Halteelements (49) im zweiten Formzustand der Innenkontur des Fassungsteils (50) entspricht.
